(19) Europäisches Patentamt

European Patent Office

Office européen des brevets

(11) **EP 1 332 639 B1**

(12) **EUROPEAN PATENT SPECIFICATION**

(45) Date of publication and mention
of the grant of the patent:
**04.10.2006 Bulletin 2006/40**

(21) Application number: **01971779.2**

(22) Date of filing: **24.07.2001**

(51) Int Cl.:
*H04Q 7/38* (2006.01)

(86) International application number:
**PCT/EP2001/008573**

(87) International publication number:
**WO 2002/011485 (07.02.2002 Gazette 2002/06)**

(54) **COMMUNICATION SYSTEM, RADIO UNIT AND METHOD OF PERFORMING A HANDOVER**

FUNKEINHEIT FÜR EIN KOMMUNIKATIONSSYSTEM UND WEITERREICHUNGSVERFAHREN

SYSTEMES DE COMMUNICATION, UNITE RADIO ET PROCEDE DE REALISATION D'UN TRANSFERT

(84) Designated Contracting States:
**AT BE CH CY DE DK ES FI FR GB GR IE IT LI LU MC NL PT SE TR**

(30) Priority: **27.07.2000 GB 0018371**

(43) Date of publication of application:
**06.08.2003 Bulletin 2003/32**

(73) Proprietor: **MOTOROLA, INC.**
**Schaumburg, IL 60196 (US)**

(72) Inventors:
• **EMBERSON, Grant, Michael**
**Basingstoke, Hampshire RG22 5UG (GB)**
• **SHAHAF, Mark**
**77462 Israel (IL)**
• **CARMON, Rafael**
**58679 Holon (IL)**
• **GLAZER, Nimrod**
**67836 Rehovot (IL)**

(74) Representative: **McCormack, Derek James et al**
**Optimus**
**Grove House, Lutyens Close,**
**Chineham Court,**
**Basingstoke,**
**Hampshire RG24 8AG (GB)**

(56) References cited:
**GB-A- 2 337 426       US-A- 5 761 240**
**US-A- 5 987 332**

• **EKSTROM T G: "Site hand off operation in a SmartZone system" VEHICULAR TECHNOLOGY CONFERENCE, 1994 IEEE 44TH STOCKHOLM, SWEDEN 8-10 JUNE 1994, NEW YORK, NY, USA, IEEE, 8 June 1994 (1994-06-08), pages 106-110, XP010123125 ISBN: 0-7803-1927-3**

EP 1 332 639 B1

**Description**

**Field of the Invention**

This invention relates to a communication system, a radio unit and a method of performing a handover in the field of radio communications. The invention is particularly applicable to the handover of service cells in a multi-cell or multi-site radio communications system.

**Background of the Invention**

Cellular mobile radio communications systems are designed to have at least one base transceiver station (BTS) and one or more subscriber units that can be affiliated tb and served by at least one BTS. The subscriber units are typically either vehicular-mounted 'mobile' or 'hand-portable' radio units. Henceforth, the term 'mobile station' ('MS') will be used to include all such subscriber units. Examples of such radio communication systems having BTSs and MSs that provide communication links between users include private mobile radio (PMR) systems primarily offering trunked communications services and applications and cellular radio systems primarily offering mobile telephony services.

In a trunked radio communications system a MS normally initiates a communication link with one of the system's BTSs in order to communicate with another MS radio. The communication link may be a simplex, semi-duplex or full duplex link performed on a radio frequency (RF) communications channel. In order to facilitate the setting up of a communication link, the communication system permits the MS to transmit a request for access to the BTS. It is known that users would like to be able to access a communication link whenever the user desires. It is also known that once a communication link has been established, and a user is communicating to another user on that communication link, the user would wish this link to be maintained with a minimum of disruption to the communication, until such time as the user chooses to terminate the link.

In multi-cell or multi-site communications, the communication link must be maintained whilst the user traverses between different cells. Therefore a handover of the communication link between cells, namely between a serving cell and a cell that the user traverses into, needs to be made during the call. In order to avoid disruption of the communication link and the likely dissatisfaction of the user, this handover needs to be as seamless as possible, inasmuch as the user should not be made aware that such a handover is, in fact, taking place.

One such multi-cell communication system is described in the European Telecommunications Standards Institute (ETSI)'s specification of Terrestrial Trunked Radio (TETRA) which is a standard digital operating system. TETRA is a time division multiple access (TDMA) system, which partitions its communications resource in periods (slots, frames, super-frames) of time. In systems such as TETRA, 'background' scanning of the neighbour cells has been required in order for a MS to be able to recognise a cell alternative to that currently used, that may better serve the user's MS. If such an alternative cell is determined, the appropriateness of handover of the communication to that cell is considered. Measurements relating to that and other cells including the currently serving cell are carried out of predetermined cell parameters such as signal strength as received at the MS. Where handover is detected to be appropriate it is performed.

Patent publication US5987332 A discloses a base station which is broadcasting information about neighboring base stations comprising a neighbour cell list including for each identified neighbour cell information on communication channel frequencies, or other communication resources, which are necessary to allow monitoring transmissions from those neighboring base stations.

Generally in trunked systems currently in use, and specifically in TETRA systems, there, are three different methods of background scanning employed, namely:

(i) foreground scanning, where there is no on-going communication and scanning is the only activity;
(ii) background scanning, where communications with the current serving cell are maintained in parallel with the scanning, and the scanning causes no interruption to that service; and
(iii) interrupting scanning, where communications with the current serving cell are maintained in parallel with the scanning, but the scanning causes limited interruptions to that service.

Clearly, the most efficient scanning method is background scanning where the MS optimises its use of the available communication resource and still avoids interruption to the communication service provided by that resource.

It is known for the MS to perform the function of background scanning by scanning transmissions from neighbour cells during time periods, typically timeslots, of inactivity. Such scanning occurs whilst communication is maintained during the other respective time periods that are being used by the MS in communicating with the BTS of the serving cell. When a more optimal communication link with an alternative BTS or cell has been identified, cell re-selection and handover is performed. If the cell re-selection and handover has taken place to provide subsequent acquisition of a resource on the new cell without the user of the MS being aware of the handover process then the handover is said to be seamless, i.e. the MS and its serving BTS have seamlessly handed over the user's communication link to the new cell.

In a potential handover situation and in order to select which neighbour cells are appropriate for scanning (synchronising to, and decoding, broadcast data), the MS first needs to perform a monitoring function of all potential candidate/adjacent cells. The MS monitors and measures parameters relating to the candidate cells within its receiving range such as received signal strength indication (RSSI) or equivalent signal quality in order to determine the best cell by which to be served. Alternatively, or in addition, a target monitor list of prospective channels and/or cells may be supplied by its serving BTS. This monitoring process and parameter such as RSSI measurements are typically made during unassigned or unused timeslots of a physical (traffic or signalling) channel to which the MS is assigned. Measurements of adjacent cell signals are made whenever possible, taking into account the mode of operation and the frequency switching capability of the MS. For each channel of each cell, the MS shall calculate a running average of, say, 5 measurement samples over a sufficient, measurement sample duration. Once the signal strength/signal quality has been determined for all adjacent cells, the MS can select a subset of cells e.g., one or two as preferred cells for which it wishes to perform a full background 'scan'.

In order to perform a seamless handover to such an alternative adjacent cell, the MS needs to be able to access all of the relevant system parameters associated with that alternative cell and assess the quality of a communication link between itself and the BTS serving that alternative cell. In background scanning, this is achieved by synchronising to alternative cell(s), receiving and decoding broadcast transmissions during periods of communications inactivity of the MS, namely during periods when it is not transmitting signals to, or receiving signals from, its serving BTS.

However, the requirement to perform background scanning has a number of disadvantages to users. For example, in a TETRA system, in order to synchronise to each channel on each adjacent cell the MS will need to receive and demodulate/decode broadcast transmissions on the broadcast network channel (BNCH) and/or the broadcast signalling channel (BSCH). In TETRA, these transmissions only occur approximately once per second. As such, the MS may have to wait a significant time before background scanning can be performed. When scanning is performed, the requirement to receive and decode the broadcast transmissions requires increased processing power.

Furthermore, under certain circumstances, the MS may not be able to perform background scanning of the neighbour cells. This may be due to the MS having insufficient time to perform the scanning, e.g., insufficient time since the last handover, or that sufficient neighbour cell broadcast information is not available in time from the BTS. In such a situation, the only alternative for the MS is to temporarily break the call (interrupt scanning) so that the MS can 'scan' transmissions from perhaps a series of alternative BTSs and then select an appropriate neighbour cell to use in order to restore the communication link. This results in a noticeable and distracting break in communication to the MS user, particularly if the call is a full duplex call. If the BTS does allow the call to be restored or continued then the call will be dropped altogether and the whole call establishment process has to be undertaken again by the MS user.

Other wireless communication systems that continuously transmit speech or data, suffer from similar handover problems. One such wireless system is the analogue trunked radio system MPT1327, utilising a frequency division multiple access (FDMA) protocol, which partitions its communications resource in frequency blocks. As such, communication on any particular frequency is generally continuous, leaving no time period available to perform adjacent cell scanning.

A further wireless communication protocol in use is code division multiple access (CDMA). The US IS-95 and the $3^{rd}$ generation digital cellular systems utilise CDMA technology, which partitions its communications resource in coded blocks. Hence, all users transmit on all frequencies, at all times. Communication links are distinguished by the codes that respective communications use. CDMA systems as set forth in IS-95, provide insufficient means for interfrequency handoff and intersystem handoff. Such continuous transmission systems do not enable a MS to scan other frequencies of its serving cell/system or other cells/systems, while active in a call, unless multiple receivers are provided which adversely impact cost, size and weight of a MS.

With CDMA a soft hand off is often performed, where hand off between adjacent cells is performed in a series of transitional stages. In soft hand-off mode, the MS communicates simultaneously with multiple BTSs that are said to be in the MS's "active set". Alternatively, the MS could negotiate with the BTS to enter into a time-discontinuous mode to allow the MS time to monitor other frequencies. In a time discontinuous mode of operation, a CDMA MS will transmit at twice its normal (specified) transmit power for half the allotted transmit time, in order to provide for the same average transmit power. By entering a mode of operation where the MS transmits for only half the time, it is able to scan transmissions from alternative (neighbouring) cells in the other 'half' time period. However, this solution is particularly costly, whereby the power amplifier of the MS has to operate at twice the previous peak power, as well as having an adverse effect on system levels of interference.

In summary, the requirement to "scan", and the consequent impact of the scanning operation on the efficiency of the communication system, BTS and MS is a major problem in the provision of handover of communications links between a serving BTS and an adjacent BTS. This invention seeks to alleviate such a problem in the provision of handover, namely a MS moving from one cell/site to another.

## Summary of the Invention

In accordance with a first aspect of the present invention there is provided a cell-based communication system including a plurality of mobile stations and a plurality of base transceiver stations each serving mobile stations within a defined cell, the system including at least one base transceiver station operable to send to its served mobile stations a broadcast message providing information about neighbour base stations and at least one mobile station operable to receive such a broadcast message and to use the information included in the broadcast message, characterized in that the system operates according to TETRA standard procedures and the broadcast message includes a colour code of at least one other base transceiver station serving mobile stations in a neighbour cell, the colour code being an identifying address which determines a cell-specific scrambling pattern used by the other base transceiver station for scrambling of transmissions by that base transceiver station and needed for use by mobile stations in order to know the scrambling pattern in order to descramble such transmissions, the colour code being included in encoded form in the broadcast message and the mobile station being operable to decode the received broadcast message to obtain the colour code.

With the mobile station (MS) and its serving base transceiver station (BTS) having a predetermined algorithm known to both to generate the same cell-specific information of a candidate cell for handing over the mobile station's communication, the cell specific information including the colour code of the base transceiver station of a neighbour cell sent in an encoded broadcast message by the serving base transceiver station, there is no need for the mobile station to perform background scanning of the candidate cell.

The serving base transceiver station may include means for providing cell parameter information and is desirably operable to generate a coded signal in which is incorporated information about the identity of the neighbour cell and other information about the neighbour cell required by the MS and the BTS in order to arrange a handover of the MS to be served by the second BTS. Desirably, the same coded signal is recognized in both the serving BTS and the MS.

The colour code distinguishes the cell served by the other neighbouring BTS from other cells to avoid erroneous multiplexing of calls on different cells and is used for example to define scrambling and frequency re-use patterns of the target cell. Desirably, the encoded broadcast message sent by the serving BTS includes a signal content recognized by both the MS and the serving BTS to define the colour codes of each of a set of cells within the system.

Preferably, the MS determines whether a handover should occur based on said provided cell parameter information and, if handover is required, a seamless handover is performed. In a preferred embodiment of the present invention, the MS monitors signals from a number of BTSs and determines at least one candidate BTS for handover based on such monitoring. The MS may transmit information on the monitored signals to its serving BTS.

In an embodiment of the invention, the neighbour cell parameter information including the colour code is generated using a pseudo random sequence generator such as a minimally correlated sequence generated from a linear feedback shift register. Such a generator may be incorporated within the MS or the BTS or preferably both.

In this manner, the generated pseudo random sequence can for example be provided in a plurality of have a minimum correlation between their respective neighbouring blocks in the pseudo random sequence, thereby reducing any error in determining the parameter information of the correct candidate cell (or BTS).

Alternatively, the communication system according to the invention may be such that the serving BTS is operable to broadcast to mobile stations served by it a signal including a code for the identity of neighbour cells and a portion indicating the colour code of each identified respective neighbour cell. For example, the colour code information may be obtained by the base transceiver station of the serving cell from its neighbours and periodically provided as part of a cell location descriptor part of the broadcast signal, e.g. as a block of the last significant digits, e.g. last six significant digits, of the so called location area code relating to an identified neighbour cell.

In a second aspect of the present invention, a radio unit substantially complying with the operational functions of the said MS of the aforementioned communications system is provided.

In a third aspect of the present invention, a base transceiver station substantially complying with the operational functions of the serving BTS of the aforementioned communications system is provided.

In a fourth aspect of the present invention there is provided a method of operation in a cell-based communication system including a plurality of mobile stations and a plurality of base transceiver stations each serving mobile stations within a defined cell, the method including at least one base transceiver station sending to its served mobile stations a broadcast message providing information about neighbour base stations and at least one mobile station receiving such a broadcast message and using the information included in the broadcast message, characterized in that the system operates according to TETRA standard procedures and the broadcast message includes a colour code of at least one other base transceiver station serving mobile stations in a neighbour cell, the colour code being an identifying address which determines a cell-specific scrambling pattern used by the other base transceiver station for scrambling of transmissions by that base transceiver station and needed for use by mobile stations in order to know the scrambling pattern in order to descramble such transmissions, the colour code being included in encoded form in the broadcast message and the mobile station decoding the received broadcast message to obtain the colour code.

It will be understood that the communication system and method of providing information about neighbour cells or BTSs, according to the invention, provides at least the following advantages over comparable communications systems.

The results achieved by the inventive concepts described herein provide a significant reduction in dropped calls or breaks in communications due to cell handovers in, at least, TETRA systems. The private mobile radio variant of trunked radio systems, as compared to the publicly shared radio system variant, is typically used by the Service operations - Police, Ambulance, Fire Brigade. Hence, maintaining the communication link, with minimal distraction to the radio user at all times, is of critical importance. As such, a reduction in the number of dropped calls is particularly desirable to the users.

The invention may be used in radio communication systems that do not support background scanning. Even when an MS supports background scanning, there will be instances when the MS has insufficient time to perform the necessary background scanning (due to terrain, cell overlap etc.). This invention proposes a fallback mechanism to mitigate this situation, the implementation of which provides superior handover performance between cells, sites or even different networks.

It is notable that the inventors of the present invention have recognised the deficiencies in prior art systems in that the requirement to perform background scanning in all cases may be detrimental to the performance of the communications system. Thus a much simpler and more effective alternative to 'scanning' has been provided by the invention that addresses the handover problem(s) previously described.

Embodiments of the present invention will now be described, by way of example, with reference to the accompanying drawings, in which:

### Brief description of the accompanying drawings

Figure 1 is a block diagram of a trunked radio communications system that can be adapted to support the various inventive concepts of a preferred embodiment of the present invention;

Figure 2 shows the conventional cell plan of the trunked radio communications system of Figure 1 and containing base stations and subscriber units that can be adapted to support the various inventive concepts of a preferred embodiment of the present invention, the figure further illustrating the so-called handover problem in such systems;

Figure 3 shows in block schematic form a linear feedback shift register arrangement to generate cell ID information in accordance with a preferred embodiment of the invention;

Figure 4 shows a block diagram of a subscriber mobile station adapted to support the inventive concepts of the preferred embodiments of the present invention; and

Figure 5 shows a flowchart of a cell handover process in accordance with the preferred embodiment of the invention.

### Description of embodiment(s) of the invention

In the existing TETRA system, background scanning is required by the MS in order to determine the synchronisation offset of the neighbour cells and the operating parameters that pertain to the neighbour cells that would enable a handover to that cell. Examples of such parameters are the colour code used by the cell (which is needed for determining say, scrambling and frequency re-use patterns of the cell), the maximum MS transmit power on the cell, the minimum receiver access level allowed on the cell etc.

In TETRA systems, each BTS and MS transmission is scrambled on a frame-by-frame basis prior to transmission. Scrambling is performed in accordance with each BTS address. This identifying address is known as the 'colour code'. In this manner each transmitted frame is only decoded correctly by the intended receiving MS that uses the individual (de-scrambling) colour code.

If, as is the case for shared TETRA systems, all cells are synchronised, and the parameters are the same for all cells in the network, then the only parameter the MS needs in order to operate on the neighbour cell is the 'colour code'. The colour code can only be obtained by receiving and demodulating/decoding the system synchronisation (SYNC) protocol data unit (PDU) transmitted on at least one of the neighbour cell's broadcast channels.

In current TETRA systems, the serving cell periodically broadcasts information about its neighbour cells. This information does not include the colour codes (6 bits) of each of the individual neighbour cells, due to the understanding in this field of endeavour that a MS will always have to acquire SYNC before using the neighbour cell. However, the serving cell does provide a cell ID (5 bits), which is a reference to a neighbour cell, and the location area (14 bits) of the neighbour cell.

An embodiment of the invention provides a mechanism for a MS to obtain, or derive the colour code of the neighbour cell, without having first background scanned the neighbour cell. Such a technique can be used if the MS has insufficient opportunity to perform the background scanning or, as may be the case with some TETRA manufacturers' MSs, the MS does not actually support background scanning. This technique significantly improves the seamless handover performance for systems such as TETRA as well as reducing the number of telephone calls dropped during handover.

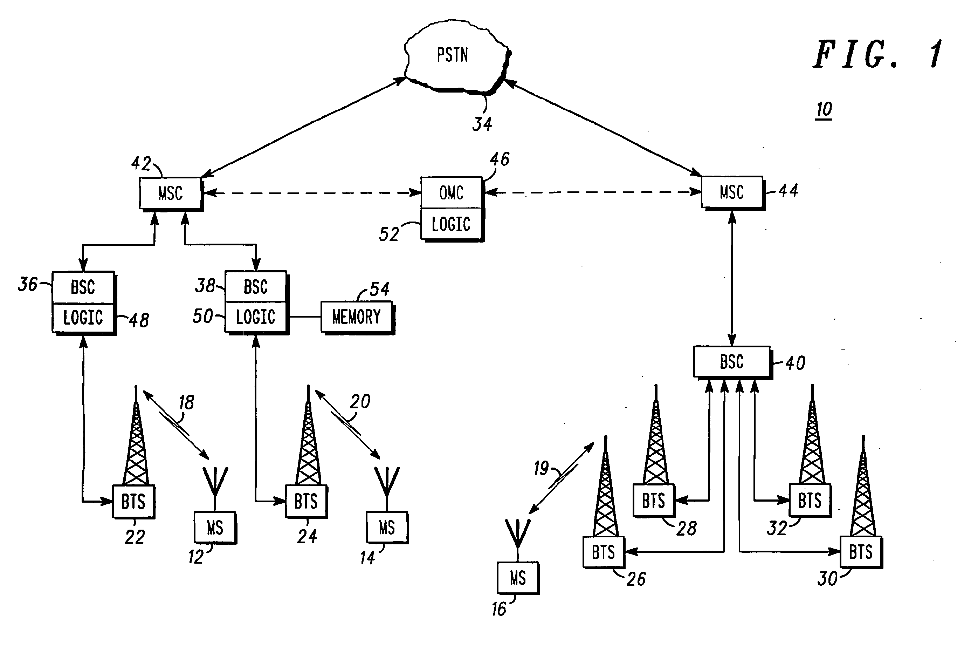

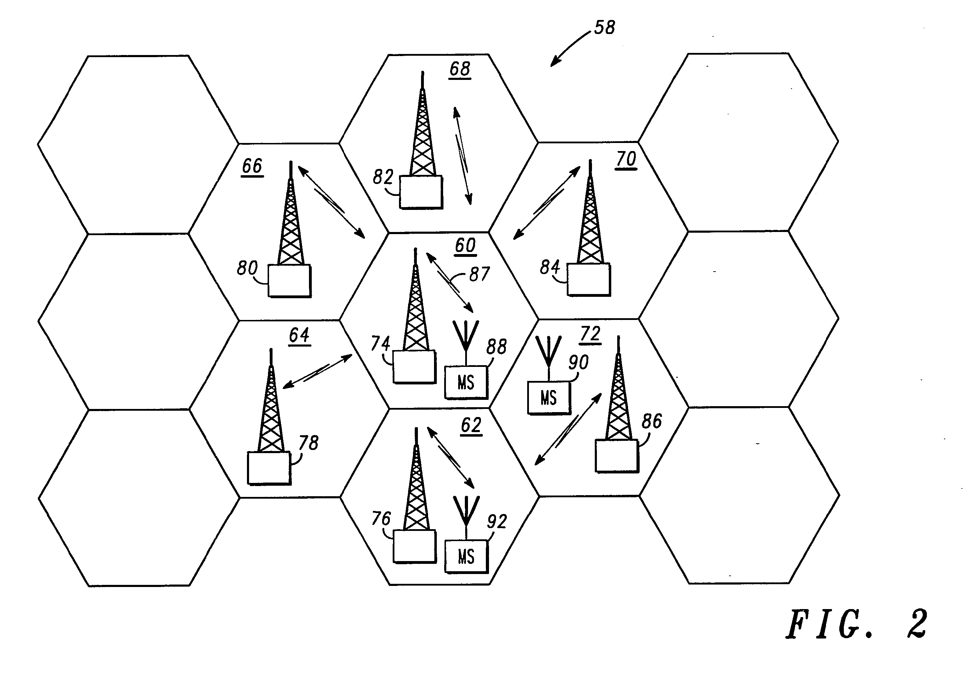

FIG. 1 shows, in outline, a trunked radio communications system 10 supporting a TETRA air-interface in accordance with a preferred embodiment of the invention. Generally, the air-interface protocol is administered from (ostensibly) co-located base sites individually assigned to specific cells (as shown in FIG. 2).

A plurality of subscriber units, such as a mixture of MSs 12-16 and fixed terminals (not shown), communicate over a selected air-interface 18-20 with a plurality of base transceiver stations (BTS) 22-32. The BTSs 22-32 may be connected to a conventional public-switched telephone network (PSTN) 34 through base station controllers (BSCs) 36-40 and mobile switching centres (MSCs) 42-44. Each BTS 22-32 is principally designed to serve its primary cell, with each BTS 22-32 containing one or more transceivers. Each BSC 36-40 may control one or more BTSs 22-32, with BSCs 36-40 generally interconnected through MSCs 42-44. Each BSC 36-40 is therefore able to communicate with one another, if desired, to pass system administration information therebetween, with BSCs responsible for establishing and maintaining control channel and traffi'c channels to serviceable MSs affiliated therewith. The interconnection of BSCs therefore allows the trunked radio communication system to support handover of the MSs between cells.

Each MSC 42-44 provides a gateway to the PSTN 34, with MSCs interconnected through an operations and management centre (OMC) that administers general control of the trunked radio system 10, as will be understood by those skilled in the art. The various system elements, such as BSCs 36-38 and OMC 46, will include control logic 48-52, with the various system elements usually having associated memory 54 (shown only in relation to BSC 38 for the sake of clarity). The memory typically stores historically compiled operational data as well as in-call data, system information and control algorithms. The general architecture of the preferred embodiment of the invention of FIG. 1 is described in further detail with reference to a honeycomb cell arrangement, as shown in FIG. 2.

FIG. 2 shows a conventional cell plan 58 containing interconnected cell areas 60-72. Each cell area has a base station sub-system (BSS) 74-86 with MSs 88-92 respectively affiliated therewith. Generally, as will be understood, a MS is in communication with its nearest BTS (which together with the BSC forms the BSS); this is shown in relation to BSS 74 and mobile station 88 of cell 60.

As previously indicated, in a TETRA system the MS 88 monitors the RF signals transmitted by the BSSs 76-86 of the adjacent cell areas 62-72. The MS 88 measures the RF signal to determine a respective RSSI parameter for each particular BSS, or makes an equivalent signal quality measurement. These measurements are made during unassigned or unused timeslots of the physical (traffic or signalling) channel to which the MS 88 is assigned. Measurements are made whenever possible, taking into account the mode of operation and the frequency switching capability of the MS. For each RSSI measurement, the MS 88 calculates a running average of measurement samples.

In order to perform a seamless handover to such an alternative cell in prior art arrangements, MS 88 would need to synchronise to the BSS the most appropriate neighbouring BSS, for example BSS 76 or BSS 86, and then perform the background scanning function by decoding the broadcast transmissions from the respective BSS in that cell area.

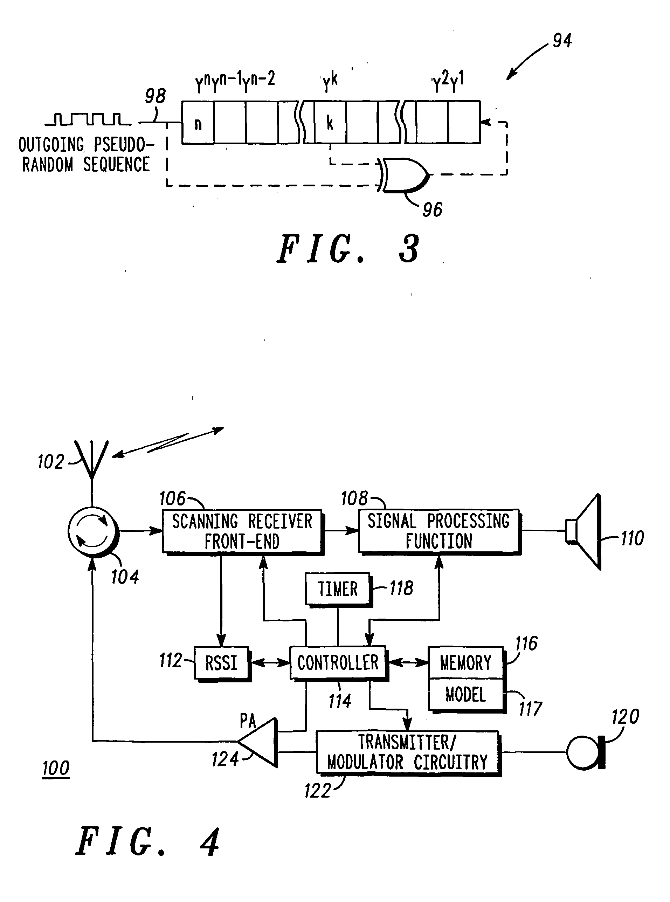

However, in accordance with the present invention, the MS 88 avoids the need to wait for the broadcast transmission and the subsequent processing power and processing time associated with such scanning by utilising the mechanism of generating the appropriate colour code, as described below with regard to FIG. 3. The individual colour code is used to avoid erroneous multiplexing of calls on different cells. Therefore, the colour codes (and the resulting scrambling sequence) should differ significantly i.e. having minimum correlation between neighbour cells. This can be achieved by using a Linear Feedback Shift Register (LFSR) mechanism, generating a pseudo-random sequence that will be used to set an appropriate colour code.

Referring to FIG. 3, there is shown a Linear Feedback Shift Register (LFSR) 94. The LFSR 94 contains a number of cells $y1, y2, y3, ......, yn$ each containing a data bit. Output paths from the final cell $yn$ and intermediate cell $yk$ are input to a NOR gate 96, where they are summed together in a modulo-2 manner. The resultant output is then fedback to the first cell $y1$, while the previous bit stored in each cell is shifted to the next cell, and in the arrangement shown in FIG. 3, the next cell to the left. A binary sequence is initially loaded into the cells of the LFSR 94, and a characteristic bit pattern is generated through successive iterations of the LFSR 94.

Mathematically, the operation of a general, multiple-feedback path LFSR is :

$$\begin{cases} y'1 = y1 \oplus y2 \oplus \ldots\ldots\ldots yn \\ y'2 = y1 \\ y'3 = y2 \\ \cdot \\ \cdot \\ y'n = yn-1 \end{cases}$$

Equation 1

This set of linear equations have the following matrix form :

$$[Y'] = [T].[Y]$$

Equation 2

where [T] is the transition matrix.
Example for n = 4.

$$\begin{bmatrix} y'1 \\ y'2 \\ y'3 \\ y'4 \end{bmatrix} = \begin{bmatrix} 1 & 1 & 1 & 1 \\ 1 & 0 & 0 & 0 \\ 0 & 1 & 0 & 0 \\ 0 & 0 & 1 & 0 \end{bmatrix} \begin{bmatrix} y1 \\ y2 \\ y3 \\ y4 \end{bmatrix}$$

Equation 3

The polynomial $P(x) = \det([T] - [X].[I])$ is the characteristic polynomial of [T]. Over the field of the integers mod 2, this can be written as:-

$$P(x) = \det([T] + [X].[I])$$

Equation 4

where [I] is the unity matrix.
Characteristic polynomials for LFSR :

$$P_4(x) = \det\left(\begin{bmatrix} 1 & 1 & 1 & 1 \\ 1 & 0 & 0 & 0 \\ 0 & 1 & 0 & 0 \\ 0 & 0 & 1 & 0 \end{bmatrix} + \begin{bmatrix} X & 0 & 0 & 0 \\ 0 & X & 0 & 0 \\ 0 & 0 & X & 0 \\ 0 & 0 & 0 & X \end{bmatrix}\right) = \begin{vmatrix} 1+X & 1 & 1 & 1 \\ 1 & X & 0 & 0 \\ 0 & 1 & X & 0 \\ 0 & 0 & 1 & X \end{vmatrix}$$

$$P_4(x) = (1+X)\begin{vmatrix} X & 0 & 0 \\ 1 & X & 0 \\ 0 & 1 & X \end{vmatrix} + \begin{vmatrix} 1 & 1 & 1 \\ 1 & X & 0 \\ 0 & 1 & X \end{vmatrix} = (1+X)\left[ X.\begin{vmatrix} X & 0 \\ 1 & X \end{vmatrix}\right] + \begin{vmatrix} X & 0 \\ 1 & X \end{vmatrix} + \begin{vmatrix} 1 & 1 \\ 1 & X \end{vmatrix}$$

$$P_4(x) = X^4 + X^3 + X^2 + X + 1$$

Therefore the polynomial for an n-cell LFSR will be:

$$P_n(x) = X^n + X^{n-1} + \cdots\cdots + X + 1$$

An LFSR having a single cycle of length $2^n - 1$ is said to be a maximum sequence LFSR and is suitable for the preferred embodiment of the invention as the quality of data mixing inside a cycle is pseudo random.

In an embodiment of the invention, as described with regard to the current bit-mapping in TETRA systems, the configuration of the LFSR 94 of m-bits length and a feedback connection at the k-bit position shall provide the maximum length of the required sequence with a minimal auto-correlation function. For example, the 14-bit shift register allocated in the TETRA timing structure can be used, having the location area code as an initial seed. Since cell ID is represented by 5 bits there can be up to 32 different cells in a cluster. The LFSR 94 will generate a sequence of 192 (32 times 6) bits and each 6 bits will be assigned as a colour code to a cell having an appropriate cell ID. That is, the first group of 6 bits will represent the colour code of the serving cell (cell ID zero), the second group of 6 bits will be used as a colour code for the neighbour cell with the cell ID of 1, and so on up to the last 6 bits creating the colour code for the neighbour cell with cell ID of 31.

The same method is applied in both the MS and the respective BTSs or SwMI to recognise the colour code from the number sequence generated. If the SwMI encodes the cell ID and location area to reflect the colour code of the neighbour cell according to a particular algorithm that is known by the MS, then the MS can derive the colour code autonomously and use a neighbour cell without having to perform any background scan.

In a further embodiment of the invention, an alternative algorithm/method to generate colour codes can be implemented by assigning, say, the least significant 6 bits of the 14 bit location area (LA) element contained in the neighbour cell broadcast information, to indicate a neighbour cell's colour code. The MS and system infrastructure (SwMI) need to have a common definition of the algorithm. In this alternative manner, the MS can also deduce the colour code of a neighbour cell without having to background scan the neighbour.

It is within the contemplation of the invention that alternative bit mapping arrangements can be used, with different bit allocations per cluster. Indeed, the use of an LFSR is not essential to the performance of the invention and any other suitable means for generating an agreed sequence, preferably a pseudo random sequence with uncorrelated blocks, can be used. Furthermore, it is within the contemplation of the invention that any algorithm used by both the MS and its respective serving BTS can be either pre-defined or can be dynamically adapted, for example by means of re-programming over the air.

In a yet further embodiment of the invention an existing element, such as the LA can be encoded to convey information about a neighbour cell. In systems such as TETRA and GSM, the LA is generally an arbitrary number allocated to a cell or group of cells. The inventors of the present invention have both recognised the opportunity to use and utilised the LA element by encoding it in such a way so that the serving BTS can indicate to a MS the preference of a neighbour cell for cell re-selection. This is particularly advantageous where a neighbour cell in a different LA may be under the control of another switching centre and handover to this LA may be prolonged or even dropped because of the need to transfer the call between switching centres. To address this potential problem, the MS deduces, from the LA, that a handover to this cell may cause the call to be dropped and therefore recommends to the MS to choose an alternative neighbour cell under the control of the current switching centre. It is envisaged that this feature can be introduced into the preferred embodiment of the MS and BTS independently generating colour codes, so as to be complementary to the handover process.

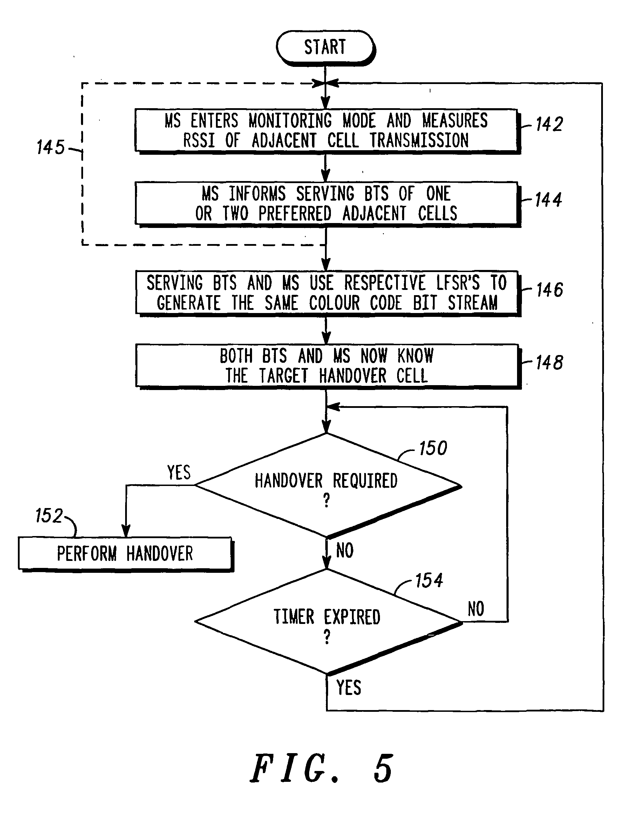

Turning now to FIG. 4, there is shown a block diagram of a MS 100 adapted to support the inventive concepts of the preferred embodiments of the present invention. The MS 100 contains an antenna 102 preferably coupled to a duplex filter or circulator 104 providing isolation between receive and transmit chains within the MS 100. The receiver chain includes scanning receiver front-end circuitry 106 (effectively providing reception, filtering and intermediate or base-band frequency conversion). The scanning front-end circuitry can still be used to perform foreground scanning, if desired, when the MS is not participating in a communication.

The scanning front-end circuit is serially coupled to a signal processing function 108 (providing for example equalisation and demodulation). The signal processing function 108 in the present invention has been adapted to autonomously generate the pseudo random sequence indicative of a cell (or BTS) parameter of candidate cells. It is within the contemplation of the invention that the preferred use of a LFSR can be implemented in software, firmware or hardware, with the function being shown in FIG. 4 as a processor merely being a preferred option. An output from the signal processing function is provided to a suitable output device 110, such as a speaker or visual display unit (VDU).

The receiver chain also includes received signal strength indicator (RSSI) circuitry 112 (shown coupled to the scanning receiver front-end 106, although the RSSI circuitry 112 could be located elsewhere within the receiver chain). The RSSI circuitry is coupled to a controller 114 for maintaining overall subscriber unit control, which controller 114 is also coupled to the scanning receiver front-end circuitry 106 and the signal processing function 108 (generally realised by a digital signal processor, DSP). The controller 114 may therefore receive bit error rate (BER) or frame error rate (FER) data from recovered information. The controller is also coupled to a memory device 116 that stores operating regimes, such as decoding/encoding functions and the like, and data relating to a monitored list of suitable neighbouring cell sites. A timer 118 is typically coupled to the controller 114 to control the timing of operations (transmission or reception of time-dependent signals) within the MS.

As regards the transmit chain, this essentially includes an input device 120, such as a transducer or other man-machine interface (e.g., a keypad), coupled in series through transmitter/modulation circuitry 122 and a power amplifier 124. The transmitter/modulation circuitry 122 and the power amplifier 124 are operationally responsive to the controller, with an output from the power amplifier coupled to the duplex filter or circulator 104.

Of course, the various components within the MS 100 can be realised in discrete or integrated component form, with an ultimate structure therefore being merely an arbitrary selection. Furthermore, a substantially similar circuit arrangement is found in BTSs.

FIG. 5 shows a flowchart of the cell handover process in accordance with a preferred embodiment of the invention. The process starts at step 140, with the MS entering an adjacent-cell 'monitoring' mode at step 142 where adjacent cell transmissions are measured and RSSI levels respectively determined. Once the preferred candidate adjacent cell(s) for subsequent handover has/have been determined using the measured RSSI levels of the adjacent cells, the monitored information on the preferred candidate adjacent cell(s) may be transmitted to its serving BTS, as shown in step 144.

These monitoring, determining and informing steps are continued whenever possible to maintain an accurate adjacent cell candidate list, as shown in path 145. When the MS and serving BTS recognise the need to perform a cell handover, by say the RSSI level for signals received at both the MS and its serving BTS falling below a predetermined acceptable threshold level, 'the serving BTS and the MS use their respective LFSRs to generate the same colour code bit stream, as in step 146 and as described with reference to FIG. 4. Both the serving BTS and the MS can now determine, as in step 148, the candidate cell for handover as dictated by the algorithms used in step 146. If handover is still required, as in step 150, cell handover of the MS's communication is performed in step 152, without the MS having 'scanned' the candidate cell.

If handover is not yet required, e.g. the RSSI level has fallen below a threshold dictating that cell handover should be considered, but has not yet fallen below a threshold that dictates that communication with the serving BTS is about to fail and cell handover must be performed, then a timer is started, as shown in step 154. The timer will dictate how long the candidate cell selection will remain valid, due to varying propagation conditions and movement of the MS towards, perhaps, an alternative candidate cell. If the timer has not exceeded a particular threshold level in step 154, either predetermined or dynamically set dependent upon the various RSSI levels monitored from all adjacent cells, then handover to the selected candidate cell will still be favoured, as shown in the loop of step 154 to step 150. Once the timer threshold has expired, the process of monitoring, determining, informing and generating a colour code bit stream is repeated, as shown in step 154 to step 142.

Although the invention has been described with reference to the TETRA communication specification, utilising a TDMA access protocol, the inventive concepts contained herein are clearly suitable to alternative radio communications system technologies and access protocols.

It is also within the contemplation of the invention that alternative arrangements for identifying and accessing cells (or BTSs) would benefit from the inventive concepts described herein. The invention is therefore not limited to use of 'colour codes' detailing scrambling and frequency re-use patterns, but can be more generically applied to any process for identifying cell (or BTS) parameters, of identified cells.

**Claims**

1. A cell-based communication system (10, 58) including a plurality of mobile stations (88-92) and a plurality of base transceiver stations (74-86) each serving mobile stations within a defined cell (60, 62), the system (10, 58) including at least one base transceiver station (74) operable to send to its served mobile stations a broadcast message providing information about neighbour base transceiver stations and at least one mobile station (88) operable to receive such a broadcast message and to use the information included in the broadcast message, **characterized in that** the system operates according to TETRA:standard procedures and the broadcast message includes a colour code of at least one other base transceiver station (76) serving mobile stations in a neighbour cell, the colour code being an identifying address which determines a cell-specific scrambling pattern used by the other base transceiver station (76) for scrambling of transmissions by that base transceiver station and needed for use by mobile stations in order to know the scrambling pattern in order to descramble such transmissions, the colour code being included in encoded form in the broadcast message and the mobile station (88) being operable to decode the received broadcast message to obtain the colour code.

2. A system according to claim 1 wherein the mobile station is operable to use the decoded colour code in a cell re-selection or handover procedure.

3. A communication system according to claim 1 or claim 2 and wherein the base transceiver station (74) is operable to provide a coded broadcast message in which is incorporated information about the identity of the neighbour cell (62) and other information about the neighbour cell (62) required by the mobile station (88) and its serving base transceiver station (74) in order to arrange a handover of the mobile station (88) to be served by the other base transceiver station (76).

4. A communication system according to claim 3 wherein the colour code distinguishes the cell served by the other base transceiver station (76) from other cells to avoid erroneous multiplexing of calls on different cells.

5. A communication system according to any one of the preceding claims and wherein the base transceiver station (74) includes means for providing neighbour cell parameter information in encoded form which comprises a pseudo random sequence generator to generate a pseudo random sequence indicative of said neighbour cell parameter information.

6. A communication system according to claim 5 and wherein the pseudo random sequence generator comprises a shift register to generate said pseudo random sequence.

7. A communication system according to claim 6 and wherein the shift register is a linear feedback shift register.

8. A communication system according to any one of claims 5 to 7 and wherein the pseudo random sequence generated in operation by the sequence generator includes a plurality of blocks of digits each of which has a minimum correlation with its respective neighbour blocks in the pseudo random sequence.

9. A communication system according to claim 8 and wherein consecutive blocks of the pseudo random sequence indicate operating parameter information of alternative cells including the cell having the other base transceiver station (76).

10. A communication system according to any one preceding claim and wherein the serving base transceiver station (74) is operable to broadcast to mobile stations served by it a signal giving a code for the identity of neighbour cells and a portion indicating the colour code of each identified respective neighbour cell.

11. A communication system according to any one of the preceding claims and wherein the mobile station (88) further comprises means for monitoring signals from a plurality of base transceiver stations and determining at least one candidate base transceiver station for handover based on such monitoring.

12. A system according to claim 11 and wherein the mobile station is operable also to determine whether a handover should occur based on information about the neighbour cell or cells.

13. A communication system according to any one of the preceding claims and wherein the serving base transceiver station (74) and the mobile station (88) are operable to perform seamless handover of the mobile station to be served by the other base transceiver station (76) using the cell parameter information broadcast by the serving base transceiver station (74).

14. A communication system according to claim 12 or claim 13 and which further comprises in the mobile station a transmitter operable to transmit information about the monitored signals to its serving base transceiver station, the base transceiver station having a receiver to receive the information about the monitored signals and a processor for generating neighbour cell parameter information substantially in concordance with the mobile station.

15. A communication system according to any one of the preceding claims and wherein the serving base transceiver station further includes a processor for determining whether a neighbour cell proposed for handover is optimal, and a transmitter for transmitting a message indicating an alternative neighbour cell to the mobile station in response to a negative determination.

16. A communication system according to claim 15 and wherein the message indicating an alternative neighbour cell is contained within a location identification element.

17. A communication system according to any one of the preceding claims and wherein the access protocol being used in the communication system is at least one of TDMA, FDMA and CDMA.

18. A communication system according to any one of the preceding claims and wherein the system operates according to TETRA standard procedures.

19. A radio unit for use as the said mobile station (88) in the communications system according to any one of preceding claims 1 to 18.

20. A radio unit according to claim 19, the radio unit having a transmitter for transmitting data to, and a receiver for receiving data from, a serving base transceiver station, the radio unit including means (94, 96, 108) for generating cell parameter information of a neighbour cell (72) so as to facilitate cell re-selection or handover of a communication between said serving base transceiver station (76) and a second base transceiver station (86) serving the neighbour cell (72) without the mobile station accessing or receiving information from the neighbour cell providing said neighbour cell parameter information.

21. A base transceiver station for use as the said at least one base transceiver station (74) in the communications system according to any one of preceding claims 1 to 18.

22. A base transceiver station according to claim 21, the base transceiver station having a transmitter for transmitting data to, and a receiver for receiving data from, a mobile station, the base transceiver station including means (94, 96) for generating cell parameter information of a neighbour cell (72) so as to facilitate handover of a communication of the mobile station to a second base transceiver station (86) serving the neighbour cell (72).

23. A base transceiver station according to claim 21 or claim 22 and which is operable to broadcast in an encoded message colour codes of each of a set of cells within the system.

24. A method of operation in a cell-based communication system (10, 58) including a plurality of mobile stations (88-92) and a plurality of base transceiver stations (74-86) each serving mobile stations within a defined cell (60, 62), the method (10, 58) including at least one base transceiver station (74) sending to its served mobile stations a broadcast message providing information about neighbour base stations and at least one mobile station (88) receiving such a broadcast message and using the information included in the broadcast message, **characterized in that** the system operates according to TETRA standard procedures and the broadcast message includes a colour code of at least one other base transceiver station (76) serving mobile stations in a neighbour cell, the colour code being an identifying address which determines a cell-specific scrambling pattern used by the other base transceiver station (76) for scrambling of transmissions by that base transceiver station and needed for use by mobile stations in order to know the scrambling pattern in order to descramble such transmissions, the colour code being included in encoded form in the broadcast message and the mobile station (88) decoding the received broadcast message to obtain the colour code.

25. A method according to claim 24 and including the mobile station using the decoded colour code in a cell re-selection or handover procedure.

26. A method according to claim 24 or claim 25 and further comprising the steps of:

monitoring (142) signals from a number of said plurality of base transceiver stations by the mobile station; and determining at least one candidate base transceiver unit for handover based on such monitoring.

**Patentansprüche**

1. Zellenbasiertes Kommunikationssystem (10, 58), das eine Mehrzahl von Mobilstationen (88-92) und eine Mehrzahl von Basistransceiverstationen (74-86), von denen jede Mobilstationen innerhalb einer definierten Zelle (60, 62) versorgt, umfasst, wobei das System (10, 58) umfasst:

   zumindest eine Basistransceiverstation (74), die betriebsfähig ist, eine Broadcast-Nachricht, die Information über Nachbarbasistransceiverstationen zur Verfügung stellt, an durch sie versorgte Mobilstationen zu senden; und

   zumindest eine Mobilstation (88), die betriebsfähig ist, solch eine Broadcast-Nachricht zu empfangen und die in der Broadcast-Nachricht umfasste Information zu verwenden;

   **dadurch gekennzeichnet, dass** das System gemäß TETRA-Standard-Prozeduren arbeitet und die Broadcast-Nachricht einen Farbcode von zumindest einer anderen Basistransceiverstation (76), die Mobilstationen in einer Nachbarzelle versorgt, umfasst, wobei es sich bei dem Farbcode um eine identifizierende Adresse handelt, die ein zellspezifisches Scramblingmuster ermittelt, das durch die andere Basistransceiverstation (76) für ein Scrambling von Übertragungen durch diejenige Basistransceiverstation verwendet wird und zur Verwendung durch Mobilstationen für eine Kenntnis des Scramblingmusters, um solche Übertragungen zu descramblen, erforderlich ist, wobei der Farbcode in der Broadcast-Nachricht in codierter Form umfasst ist und wobei die Mobilstation (88) betriebsfähig ist, die empfangene Broadcast-Nachricht zu decodieren, um den Farbcode zu erhalten.

2. System nach Anspruch 1, wobei die Mobilstation betriebsfähig ist, den decodierten Farbcode bei einer Zellneuwahl- oder Handoverprozedur zu verwenden.

3. Kommunikationssystem nach Anspruch 1 oder Anspruch 2, und wobei die Basistransceiverstation (74) betriebsfähig ist, eine codierte Broadcast-Nachricht zur Verfügung zu stellen, in der Information über die Identität der Nachbarzelle (62) und weitere Information über die Nachbarzelle (62) umfasst ist, die durch die Mobilstation (88) und ihre versorgende Basistransceiverstation (74) benötigt wird, um ein Handover der Mobilstation (88) durchzuführen, so dass sie durch die andere Basistransceiverstation (76) versorgt wird.

4. Kommunikationssystem nach Anspruch 3, wobei der Farbcode die durch die andere Basistransceiverstation (76) versorgte Zelle von anderen Zellen unterscheidet, um irrtümliches Multiplexing von Rufen auf unterschiedlichen Zellen zu vermeiden.

5. Kommunikationssystem nach einem der vorangehenden Ansprüche, und wobei die Basistransceiverstation (74) Mittel umfasst, die einen Pseudozufallsfolgengenerator für ein Erzeugen einer Pseudozufallsfolge, die die Nachbarzellparameterinformation anzeigt, umfassen, um Nachbarzellparameterinformation in codierter Form zur Verfügung zu stellen.

6. Kommunikationssystem nach Anspruch 5, und wobei der Pseudozufallsfolgengenerator ein Schieberegister umfasst, um die Pseudozufallsfolge zu erzeugen.

7. Kommunikationssystem nach Anspruch 6, und wobei das Schieberegister ein linear rückgekoppeltes Schieberegister ist.

8. Kommunikationssystem nach einem der Ansprüche 5 bis 7, und wobei die durch den Folgengenerator in Betrieb erzeugte Pseudozufallsfolge eine Mehrzahl von Ziffernblöcken umfasst, von denen jeder eine Mindestkorrelation mit seinen entsprechenden Nachbarblöcken in der Pseudozufallsfolge aufweist.

9. Kommunikationssystem nach Anspruch 8, und wobei aufeinander folgende Blöcke der Pseudozufallsfolge Betriebsparameterinformation alternativer Zellen anzeigen, wobei die Zelle mit der anderen Basistransceiverstation (76) umfasst wird.

10. Kommunikationssystem nach einem vorangehenden Anspruch, und wobei die versorgende Basistransceiverstation (74) betriebsfähig ist, ein Signal, das einen Code für die Identität von Nachbarzellen angibt, und einen Abschnitt, der den Farbcode von jeder identifizierten entsprechenden Nachbarzelle anzeigt, an durch sie versorgte Mobilstationen zu übertragen.

**11.** Kommunikationssystem nach einem der vorangehenden Ansprüche, und wobei die Mobilstation (88) darüber hinaus Mittel umfasst, um Signale von einer Mehrzahl von Basistransceiverstationen zu überwachen und basierend auf solchem Überwachen zumindest eine Kandidatenbasistransceiverstation für ein Handover zu ermitteln.

**12.** System nach Anspruch 11, und wobei die Mobilstation betriebsfähig ist, auch zu ermitteln, ob basierend auf Information über die Nachbarzelle oder -zellen ein Handover stattfinden sollte.

**13.** Kommunikationssystem nach einem der vorangehenden Ansprüche, und wobei die versorgende Basistransceiverstation (74) und die Mobilstation (88) betriebsfähig sind, ein nahtloses Handover der Mobilstation durchzuführen, so dass sie durch die andere Basistransceiverstation (76) versorgt wird, wobei der Zellparameterinformationsbroadcast durch die versorgende Basistransceiverstation (74) verwendet wird.

**14.** Kommunikationssystem nach Anspruch 12 oder Anspruch 13, und das darüber hinaus in der Mobilstation einen Sender umfasst, der betriebsfähig ist, Information über die überwachten Signale an ihre versorgende Basistransceiverstation zu übertragen, wobei die Basistransceiverstation einen Empfänger, um die Information über die überwachten Signale zu empfangen, und einen Prozessor, um Nachbarzellparameterinformation im Wesentlichen gemäß der Mobilstation zu erzeugen, aufweist.

**15.** Kommunikationssystem nach einem der vorangehenden Ansprüche, und wobei die versorgende Basistransceiverstation darüber hinaus umfasst:

einen Prozessor, um zu ermitteln, ob eine für ein Handover vorgeschlagene Nachbarzelle optimal ist; und einen Sender, um eine Nachricht, die der Mobilstation als Antwort auf eine negative Ermittlung eine alternative Nachbarzelle anzeigt, zu übertragen.

**16.** Kommunikationssystem nach Anspruch 15, und wobei die Nachricht, die eine alternative Nachbarzelle anzeigt, innerhalb eines Standortidentifikationselements umfasst ist.

**17.** Kommunikationssystem nach einem der vorangehenden Ansprüche, und wobei das in dem Kommunikationssystem verwendete Zugangsprotokoll TDMA und/oder FDMA und/oder CDMA ist.

**18.** Kommunikationssystem nach einem der vorangehenden Ansprüche, und wobei das System gemäß TETRA-Standard-Prozeduren arbeitet.

**19.** Funkeinheit zur Verwendung als die Mobilstation (88) in dem Kommunikationssystem nach einem der vorangehenden Ansprüche 1 bis 18.

**20.** Funkeinheit nach Anspruch 19, wobei die Funkeinheit einen Sender für ein Senden von Daten zu und einen Empfänger für ein Empfangen von Daten von einer versorgenden Basistransceiverstation aufweist, wobei die Funkeinheit Mittel (94, 96, 108) umfasst, um Zellparameterinformation einer Nachbarzelle (72) zu erzeugen, so dass Zellneuwahl oder Handover einer Kommunikation zwischen der versorgenden Basistransceiverstation (76) und einer zweiten Basistransceiverstation (86), die die Nachbarzelle (72) versorgt, unterstützt wird, ohne dass die Mobilstation auf Information von der Nachbarzelle, die die Nachbarzellparameterinformation zur Verfügung stellt, zugreift oder sie empfängt.

**21.** Basistransceiverstation zur Verwendung als die zumindest eine Basistransceiverstation (74) in dem Kommunikationssystem nach einem der vorangehenden Ansprüche 1 bis 18.

**22.** Basistransceiverstation nach Anspruch 21, wobei die Basistransceiverstation einen Sender für ein Übertragen von Daten zu und einen Empfänger für ein Empfangen von Daten von einer Mobilstation aufweist, wobei die Basistransceiverstation Mittel (94, 96) umfasst, um Zellparameterinformation einer Nachbarzelle (72) zu erzeugen, so dass ein Handover einer Kommunikation der Mobilstation zu einer zweiten Basistransceiverstation (86), die die Nachbarzelle (72) versorgt, unterstützt wird.

**23.** Basistransceiverstation nach Anspruch 21 oder Anspruch 22, und die betriebsfähig ist, Farbcodes von jeder aus einem Satz an Zellen innerhalb des Systems in einer codierten Nachricht zu übertragen.

**24.** Betriebsverfahren in einem zellenbasierten Kommunikationssystem (10, 58), das eine Mehrzahl von Mobilstationen (88-92) und eine Mehrzahl von Basistransceiverstationen (74-86), von denen jede Mobilstationen innerhalb einer definierten Zelle (60, 62) versorgt, umfasst, wobei das Verfahren (10, 58) umfasst:

> zumindest eine Basistransceiverstation (74), die eine Broadcast-Nachricht, die Information über Nachbarbasisstationen zur Verfügung stellt, an durch sie versorgte Mobilstationen sendet; und
> zumindest eine Mobilstation (88), die solch eine Broadcast-Nachricht empfängt und die in der Broadcast-Nachricht umfasste Information verwendet;

> **dadurch gekennzeichnet, dass** das System gemäß TETRA-Standard-Prozeduren arbeitet und die Broadcast-Nachricht einen Farbcode von zumindest einer anderen Basistransceiverstation (76), die Mobilstationen in einer Nachbarzelle versorgt, umfasst, wobei es sich bei dem Farbcode um eine identifizierende Adresse handelt, die ein zellspezifisches Scramblingmuster ermittelt, das durch die andere Basistransceiverstation (76) für ein Scrambling von Übertragungen durch diejenige Basistransceiverstation verwendet wird und zur Verwendung durch Mobilstationen für eine Kenntnis des Scramblingmusters, um solche Übertragungen zu descramblen, erforderlich ist, wobei der Farbcode in codierter Form in der Broadcast-Nachricht umfasst ist und wobei die Mobilstation (88) die empfangene Broadcast-Nachricht decodiert, um den Farbcode zu erhalten.

**25.** Verfahren nach Anspruch 24, und das umfasst, dass die Mobilstation den decodierten Farbcode bei einer Zellneuwahl- oder Handoverprozedur verwendet.

**26.** Verfahren nach Anspruch 24 oder Anspruch 25, und das darüber hinaus die Schritte umfasst:

> Überwachen (142) von Signalen von einer Anzahl aus der Mehrzahl von Basistransceiverstationen durch die Mobilstation; und
> Ermitteln zumindest einer Kandidatenbasistransceivereinheit für ein Handover basierend auf solchem Überwachen.

## Revendications

**1.** Système de communication cellulaire (10, 58) comprenant une pluralité de stations mobiles (88-92) et une pluralité de stations émettrices de base (74-86), chacune desservant des stations mobiles à l'intérieur d'une cellule définie (60, 62), le système (10, 58) comprenant au moins une station émettrice de base (74) pouvant être actionnée pour envoyer à ses stations mobiles desservies un message diffusé délivrant une information concernant les stations émettrices de base voisines et au moins une station mobile (88) pouvant être actionnée pour recevoir ce message diffusé et pour utiliser l'information comprise dans le message diffusé, **caractérisé en ce que** le système fonctionne selon le standard TETRA et le message diffusé comprend un code couleur d'au moins une autre station émettrice de base (76) desservant des stations mobiles dans une cellule voisine, le code couleur étant une adresse d'identification qui détermine un motif de brouillage spécifique à la cellule utilisé par l'autre station émettrice de base (76) pour le brouillage de transmissions par cette station émettrice de base et utilisé pour une utilisation par des stations mobiles afin de connaître le motif de brouillage pour débrouiller ces transmissions, le code couleur étant inclus sous forme encodée dans le message diffusé et la station mobile (88) pouvant être actionnée pour décoder le message diffusé reçu afin d'obtenir le code couleur.

**2.** Système selon la revendication 1, dans lequel la station mobile peut être actionnée pour utiliser le code couleur décodé lors d'une resélection de cellule ou une procédure de transfert.

**3.** Système de communication selon la revendication 1 ou la revendication 2, dans lequel la station émettrice de base (74) peut être actionnée pour délivrer un message diffusé codé dans lequel est incorporée une information concernant l'identité de la cellule voisine (62) et une autre information concernant la cellule voisine (62) requise par la station mobile (88) et sa station émettrice de base la desservant (74) afin d'effectuer un transfert de la station mobile (88) pour être desservie par l'autre station émettrice de base (76).

**4.** Système de communication selon la revendication 3, dans lequel le code couleur distingue la cellule desservie par l'autre station émettrice de base (76) des autres cellules pour éviter un multiplexage erroné des appels dans différentes cellules.

**5.** Système de communication selon l'une quelconque des revendications précédentes, dans lequel la station émettrice de base (74) comprend des moyens pour délivrer une information de paramètre de cellule voisine sous forme encodée qui comporte un générateur de séquence pseudo aléatoire pour générer une séquence pseudo aléatoire indiquant ladite information de paramètre de cellule voisine.

6. Système de communication selon la revendication cinq, dans lequel le générateur de séquence pseudo aléatoire comprend un registre à décalage pour générer ladite séquence pseudo aléatoire.

7. Système de communication selon la revendication 6, dans lequel le registre à décalage est un registre à décalage à rétroaction linéaire.

8. Système de communication selon l'une quelconque des revendications 5 à 7, dans lequel la séquence pseudo aléatoire générée en fonctionnement par le générateur de séquence comprend une pluralité de blocs de chiffres, chacun d'eux présentant une corrélation minimum avec ses blocs voisins respectifs dans la séquence pseudo aléatoire.

9. Système de communication selon la revendication 8, dans lequel des blocs consécutifs de la séquence pseudo aléatoire indiquent l'information de paramètre utilisée des autres cellules comprenant la cellule possédant l'autre station émettrice de base (76).

10. Système de communication selon l'une quelconque des revendications précédentes, dans lequel la station émettrice de base desservant (74) peut être actionnée pour diffuser aux stations mobiles desservies par elle un signal donnant un code pour l'identité des cellules voisines et une partie indiquant le code couleur de chaque cellule voisine respective identifiée.

11. Système de communication selon l'une quelconque des revendications précédentes, dans lequel la station mobile (88) comprend en outre des moyens pour surveiller les signaux provenant d'une pluralité de stations émettrices de base et déterminer au moins une station émettrice de base candidate pour le transfert en fonction de cette surveillance.

12. Système selon la revendication 11, dans lequel la station mobile peut être actionnée également pour déterminer si oui ou non un transfert doit s'effectuer en fonction d'une information concernant la cellule ou les cellules voisines.

13. Système de communication selon l'une quelconque des revendications précédentes, dans lequel la station émettrice de base desservant (74) et la station mobile (88) peuvent être actionnées pour effectuer un transfert transparent de la station mobile desservie par l'autre station émettrice de base (76) en utilisant la diffusion de l'information de paramètre de cellule par la station émettrice de base desservant (74).

14. Système de communication selon la revendication 12 ou la revendications 13, qui comporte en outre dans la station mobile un émetteur pouvant être actionné pour transmettre une information concernant les signaux surveillés à sa station émettrice de base desservant, la station émettrice de base possédant un récepteur pour recevoir l'information concernant les signaux surveillés et un processeur pour générer une information de paramètre de cellule voisine sensiblement conformément à la station mobile.

15. Système de communication selon l'une quelconque des revendications précédentes, dans lequel la station émettrice de base desservant comprend en outre un processeur pour déterminer si oui ou non une cellule voisine proposée pour le transfert est optimale, et un émetteur pour émettre un message désignant une autre cellule voisine à la station mobile en réponse à une détermination négative.

16. Système de communication selon la revendication 15, dans lequel le message désignant une autre cellule voisine est contenu dans un élément d'identification d'emplacement.

17. Système de communication selon l'une quelconque des revendications précédentes, dans lequel le protocole d'accès utilisé dans le système de communication est au moins l'un de TDMA, FDMA et CDMA.

18. Système de communication selon l'une quelconque des revendications précédentes, dans lequel le système fonctionne selon le standard TETRA.

19. Unité radio utilisée en tant que ladite station mobile (88) dans le système de communication selon l'une quelconque des revendications précédentes 1 à 18.

20. Unité radio selon la revendication 19, l'unité radio possédant un émetteur pour émettre des données vers, et un récepteur pour recevoir des données de, une station émettrice de base desservant, l'unité radio comprenant des moyens (94, 96, 108) pour générer une information de paramètre de cellule d'une cellule voisine (72) pour faciliter la resélection de cellule ou le transfert d'une communication entre ladite station émettrice de base desservant (76) et une seconde station émettrice de base (86) desservant la cellule voisine (72) sans que la station de base accède ou reçoive une information provenant de la cellule voisine délivrant ladite information de paramètre de cellule voisine.

21. Station émettrice de base utilisée en tant que ladite au moins une station émettrice de base (74) dans le système de communication selon l'une quelconque des revendications précédentes 1 à 18.

22. Station émettrice de base selon la revendication 21, la station émettrice de base possédant un émetteur pour émettre des données vers, et un récepteur pour recevoir des données de, une station mobile, la station émettrice de base comportant des moyens (94, 96) pour générer une information de paramètre de cellule d'une cellule voisine (72) de manière à faciliter le transfert d'une communication de la station mobile vers une seconde station émettrice de base (86) desservant la cellule voisine (72).

23. Station émettrice de base selon la revendication 21 ou la revendication 22, qui peut être actionnée pour diffuser dans un message encodé des codes couleur de chacune d'un ensemble de cellules à l'intérieur du système.

24. Procédé de fonctionnement dans un système de communication à base de cellules (10, 58) comprenant une pluralité de stations mobiles (88-92) et une pluralité de stations émettrices de base (74-86), chacune desservant des stations mobiles à l'intérieur d'une cellule définie (60, 62), le procédé (10, 58) comprenant au moins une station émettrice de base (74) envoyant à ses stations mobiles desservies un message diffusé délivrant une information concernant les stations de base voisines et au moins une station mobile (88) recevant ce message diffusé et utilisant l'information incluse dans le message diffusé, **caractérisé en ce que** le système fonctionne selon le standard TETRA et le message diffusé comprend un code couleur d'au moins une autre station émettrice de base (76) desservant des stations mobiles dans une cellule voisine, le code couleur étant une adresse d'identification qui détermine un motif de brouillage spécifique à la cellule utilisé par l'autre station émettrice de base (76) pour crypter les émissions par cette station émettrice de base et nécessaire pour une utilisation par les stations mobiles afin de connaître le motif de brouillage pour débrouiller ces transmissions, le code couleur étant inclus sous une forme encodée dans le message diffusé et la station mobile (88) décodant le message diffusé reçu pour obtenir le code couleur.

25. Procédé selon la revendication 24, comprenant la station mobile utilisant le code couleur décodé lors d'une resélection de cellule ou une procédure de transfert.

26. Procédé selon la revendication 24 ou la revendication 25, comportant en outre les étapes consistant à :

   surveiller (142) des signaux provenant d'un certain nombre de ladite pluralité de stations émettrices de base par la station mobile ; et
   déterminer au moins une unité émettrice de base candidate pour un transfert en fonction de cette surveillance.

*FIG. 1*

EP 1 332 639 B1

*FIG. 2*

_94_

γ^nγ^{n-1}γ^{n-2}    γ^k    γ^2γ^1

_98_

| n | | | | k | | | | |

OUTGOING PSEUDO-
RANDOM SEQUENCE

_96_

## FIG. 3

_102_

_106_  SCANNING RECEIVER
FRONT-END

_108_  SIGNAL PROCESSING
FUNCTION

_110_

_104_

TIMER —_118_

_112_— RSSI    CONTROLLER    MEMORY    _116_

MODEL    _117_

_114_

PA

_124_

TRANSMITTER/
MODULATOR CIRCUITRY

_120_

_100_

_122_

## FIG. 4

START

MS ENTERS MONITORING MODE AND MEASURES
RSSI OF ADJACENT CELL TRANSMISSION — 142

145 —

MS INFORMS SERVING BTS OF ONE
OR TWO PREFERRED ADJACENT CELLS — 144

SERVING BTS AND MS USE RESPECTIVE LFSR'S TO
GENERATE THE SAME COLOUR CODE BIT STREAM — 146

BOTH BTS AND MS NOW KNOW
THE TARGET HANDOVER CELL — 148

— 150

HANDOVER REQUIRED
?

YES

152 —

PERFORM HANDOVER

NO

— 154

TIMER EXPIRED
?

NO

YES

# FIG. 5